# EUROPEAN PATENT SPECIFICATION

(11) **EP 2 232 930 B1**
(45) Date of publication and mention of the grant of the patent: **27.02.2019**
(21) Application number: 08856477.8
(22) Date of filing: 24.11.2008
(51) Int. Cl.: H04W 60/06, H04W 36/00

(54) **METHOD OF BEST EFFORT HANDOFF TO MAINTAIN RADIO BEARER AND MOBILE IP SESSION CONTINUITY FOR MULTI-MODE MOBILE UNITS**
VERFAHREN EINER RUFWEITERREICHUNG MIT BESTEM EINSATZ ZUR ERHALTUNG DER RADIO-BEARER UND MOBILE IP-SITZUNGSKONTINUITÄT EINES MOBILEN ENDGERÄTES MIT MEHRFACHEN MODI
PROCÉDÉ DE TRANSFERT AU MIEUX POUR MAINTENIR UNE PORTEUSE RADIO ET UNE CONTINUITÉ DE SESSION MOBILE IP POUR DES UNITÉS MOBILES MULTI-MODES

(30) Priority: 30.11.2007 US 948248
(43) Date of publication of application: 29.09.2010
(73) Proprietor: Alcatel-Lucent USA Inc., Murray Hill, NJ 07974 (US)
(72) Inventor: GRINSHPUN, Edward, Freehold NJ 07728 (US); LIU, Chung-Zin, Naperville IL 60565 (US); ZHU, Lily, H., Parsippany NJ 07054 (US)
(74) Representative: Richardt Patentanwälte PartG mbB
(86) International application number: PCT/US2008/013057
(87) International publication number: WO 2009/073101

(56) References cited:
- WO-A-2006/088331
- US-A1- 2007 041 350

## Description

### BACKGROUND OF THE INVENTION

### 1. FIELD OF THE INVENTION

This invention relates generally to communication systems, and, more particularly, to wireless communication systems.

### 2. DESCRIPTION OF THE RELATED ART

Conventional wireless communication systems provide wireless connectivity using radio access networks or other wireless entities such as access points, base stations, base station routers, and the like. For example, a mobile unit may establish a wireless communication link over an air interface with a radio access network that is a communicatively coupled to a network. The mobile unit may use the wireless communication link to access services provided by the network such as establishing a communication session with another mobile unit. The information transmitted using the communication session between the two mobile units may be analog or digital information and the communication path between the mobile units may be formed using a circuit-switched architecture or a packet-switched architecture. In a circuit-switched architecture, a dedicated communication path is formed between the two mobile units and may only be used by the two mobile units. In contrast, packet-switched architectures divide the information up into packets that can be transmitted along numerous paths between the two mobile units using a common packet network infrastructure for forwarding the packets between the mobile units and their network peers. Thus, some or all of the paths through a packet-switched network infrastructure may be shared by other mobile units or other entities coupled to the packet-switched network such as a network server or a fixed subscriber.

Voice over Internet Protocol (VoIP) is a technique for encoding audio signals (such as voice signals) into a digital format that can be used to form packets for transmission over a packet-switched network. The VoIP packets are typically referred to as delay-intolerant information because large delays between successive packets at the destination VoIP session peer (*e.g*., mobile unit) may degrade the quality of the audio signal produced by the source peer. Consequently, VoIP applications are typically constrained to provide VoIP packets at a selected quality-of-service (QoS) level. For example, a VoIP application implemented in a mobile unit may be required to maintain minimum levels of delay, latency, and the like for packets transmitted over the network. In some cases, customers may pay larger fees to obtain overall higher QoS levels of higher QoS levels for certain applications.

Numerous wireless access technologies may be used to support packet data applications. Some exemplary wireless access technologies include second generation (2G), third generation (3G), and fourth generation (4G) technologies such as 1X-EVDO, UMTS and WIMAX. These wireless access technologies operate according to standards and/or protocols such as the standards and/or protocols established by the Third Generation Partnership Project (3GPP, 3GPP2) and WiMAX Forum Network Working Group (NWG). To take advantage of the different signal strengths and existing coverage areas of the already deployed technologies, equipment vendors are developing and deploying dual mode (or multi-mode) mobile units that are capable of communicating using multiple wireless access technologies. For example, a dual-mode mobile unit may implement two independent means of IP connectivity that operate according to two different wireless access technologies. At the same time, service providers are increasingly using more than one wireless access technology to provide wireless connectivity. For example, some service providers have deployed heterogeneous networks that include overlaid meshes and/or overlapping coverage areas with different access technologies. The overlaid meshes and overlapping coverage areas may be used as part of an evolution from a legacy technology to a newer technology or for other reasons, such as reducing deployment and/or operating costs, improving the overall communication spectrum characteristics, and the like.

Individual mobile units may frequently handoff between radio access networks that utilize different wireless access technologies (and operate based upon the corresponding technology standards), as the multi-mode mobile unit roams across a heterogeneous network. For example, a mobile unit may perform network entry using an EV-DO wireless communication link over an EV-DO Radio access network, with an MIPv4 session established based upon 3GPP2 standards for a VOIP call. The mobile unit may then determine that the signal quality of the EV-DO wireless communication link has degraded and may elect to handoff to a WiMAX radio access network using the IEEE 802.16e standard over the air and WiMAX forum NWG standard for establishing MIPv4 session. Conventional best effort handoff protocols attempt to maintain seamless connectivity of the VoIP session as it is handed off from the fading EV-DO wireless communication link to the stronger WIMAX link.

Conventional hand-off protocols require that the mobile unit send a MIPv4 registration message over the new link and an explicit MIPv4 de-registration message (registration request with lifetime 0) over the fading link. Once the old technology radio access network receives the MIP de-registration message, the fading wireless communication link may be torn down and the radio access network may release the wireless communication resources used to support this link. This approach has a number of drawbacks. For example, the fading of the wireless communication link to the source radio access network may prevent the network from receiving the de-registration message, which may cause the network to maintain the allocation of unnecessary wireless communication resources. For another, transmitting the de-registration message over the fading link to the source radio access network and the registration message over the stronger link to the target radio access network may lead to race conditions, *e.g*., when the de-registration message is received at the source radio access network before the registration message is received at the target radio access network. As opposed to intra-technology handoff, in the case of inter-technology handoff there is no coordination between the source and target Radio Access Networks (typically operating based upon different networking architecture standards) that would help to resolve the aforementioned race conditions.
WO 2006/088331) relates to a method of releasing a network connection with a link of a medium access control layer previously accessed before performing a handover to a heterogeneous network in a mobile terminal configured with a multimode interface. The method comprises the steps of creating a connection with a new link, generating a trigger event indicating a connection creation with the new link and generating a trigger event instructing a connection release from an old link. Further, a de-registration request can either be sent to a home agent via the new link or the old link.

### SUMMARY OF THE INVENTION

The present invention is directed to addressing the effects of one or more of the problems set forth above. The invention is set out in the appended claims.

The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

In one embodiment of the present invention, a method is provided for best effort hand off that is implemented in a mobile unit capable of communicating with a network according to multiple wireless access technologies. The method includes performing a handoff of the mobile unit from a first wireless communication link established according to a first wireless access technology to a second wireless communication link established according to a second wireless access technology. The method also includes transmitting, from the mobile unit, over the second wireless communication link, a de-registration message requesting de-registration of the first wireless communication link in response to performing the handoff.

In another embodiment of the present invention, a method is provided for best effort hand off that is implemented in a home agent capable of supporting multiple wireless communication links with at least one mobile unit network according to multiple wireless access technologies. The method includes performing a handoff of the mobile unit from a first wireless communication link established according to a first wireless access technology to a second wireless communication link established according to a second wireless access technology. The method also includes receiving, from the mobile unit via the second wireless communication link, a de-registration message requesting de-registration of the first wireless communication link in response to performing the handoff. The method further includes sending a message requesting de-registration of the first wireless communication link.

### BRIEF DESCRIPTION OF THE DRAWINGS

The invention may be understood by reference to the following description taken in conjunction with the accompanying drawings, in which like reference numerals identify like elements, and in which:
Figure 1 conceptually illustrates a first exemplary embodiment of a wireless communication system, in accordance with the present invention;
Figure 2 conceptually illustrates a second exemplary embodiment of a wireless communication system, in accordance with the present invention;
Figure 3 conceptually illustrates one exemplary embodiment of a method for establishing concurrent call sessions with modems that operate according to different wireless access technologies, in accordance with the present invention; and
Figure 4 conceptually illustrates one exemplary embodiment of a method for de-registering a call session, in accordance with the present invention.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, and alternatives falling within the scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions should be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Portions of the present invention and corresponding detailed description are presented in terms of software, or algorithms and symbolic representations of operations on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of the invention are typically encoded on some form of program storage medium or implemented over some type of transmission medium. The program storage medium may be magnetic (e.g., a floppy disk or a hard drive) or optical (e.g., a compact disk read only memory, or "CD ROM"), and may be read only or random access. Similarly, the transmission medium may be twisted wire pairs, coaxial cable, optical fiber, or some other suitable transmission medium known to the art. The invention is not limited by these aspects of any given implementation.

The present invention will now be described with reference to the attached figures. Various structures, systems and devices are schematically depicted in the drawings for purposes of explanation only and so as to not obscure the present invention with details that are well known to those skilled in the art. Nevertheless, the attached drawings are included to describe and explain illustrative examples of the present invention. The words and phrases used herein should be understood and interpreted to have a meaning consistent with the understanding of those words and phrases by those skilled in the relevant art. No special definition of a term or phrase, *i.e*., a definition that is different from the ordinary and customary meaning as understood by those skilled in the art, is intended to be implied by consistent usage of the term or phrase herein. To the extent that a term or phrase is intended to have a special meaning, *i.e.,* a meaning other than that understood by skilled artisans, such a special definition will be expressly set forth in the specification in a definitional manner that directly and unequivocally provides the special definition for the term or phrase.

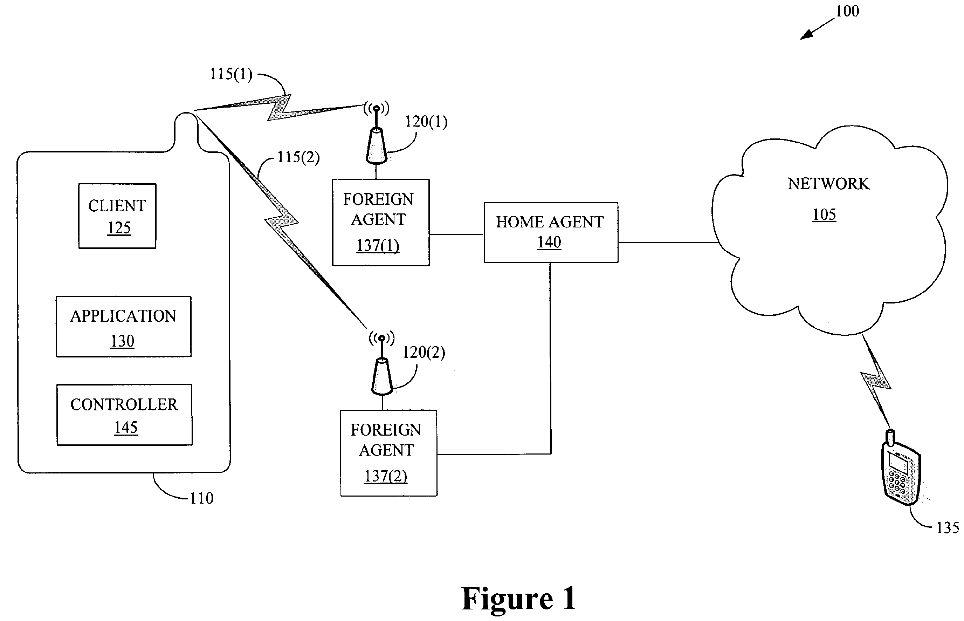

Figure 1 conceptually illustrates a first exemplary embodiment of a wireless communication system 100. In the illustrated embodiment, the wireless communication system 100 includes a network 105 that may be used to support packet-switched communication based upon Mobile Internet Protocol (MIP) and IP. Portions of the network 105 may operate according to various standards and/or protocols including the standards and/or protocols defined by the Third Generation Partnership Project (3GPP. 3GPP2) such as Universal Mobile Telecommunication Services (UMTS), Evolved Data-Optimized (EV-DO), WIMAX, and the like. However, persons of ordinary skill in the art having benefit of the present disclosure should appreciate that the present invention is not limited to these exemplary standards and/or protocols. In alternative embodiments, portions of the wireless communication system 100 and/or the network 105 may operate according to any standards and/or protocols.

One or more mobile units 110 may establish wireless communication with the network 105. In the illustrated embodiment, the mobile unit 110 is a dual-mode device that may form wireless communication links according to two different wireless access technologies. For example, the mobile unit 110 may be able to operate using either the EV-DO wireless access technology or the WIMAX wireless access technology. However, persons of ordinary skill in the art having benefit of the present disclosure should appreciate that the present invention is not limited to mobile units 110 that operate according to these to wireless access technologies. In alternative embodiments, the mobile units 110 may be dual-mode devices that can operate according to other combinations of wireless access technologies. Furthermore, in some embodiments, the mobile units 110 may be multi-mode devices that can operate according to more than two different wireless access technologies.

In operation, the mobile unit 110 may form a wireless communication link 115(1) with a radio access network 120(1) that operate according to a first wireless access technologies, such as EV-DO. In the illustrated embodiment, the mobile unit 110 may instantiate a client 125 at the application layer according to the first wireless access technology. As used herein, the term "layer" refers to different levels of a hierarchical architecture that is defined for wireless communication. A layer is a collection of related functions that provides services to the layer above it and receives service from the layer below it. One exemplary layer definition is the Open Systems Interconnection (OSI) Basic Reference Model that defines (from top to bottom) the Application, Presentation, Session, Transport, Network, Data Link, and Physical layers. An application 130 in the mobile unit 110, such as a VoIP application, may use the client 125 for communication over the wireless communication link 115(1). For example, the mobile unit 110 may establish a MIP session over the wireless communication link 115(1) and use this MIP session to establish a call with a mobile unit 135 via the radio access network 120(1), a foreign agent 137(1), a home agent 140, and the network 105. However, persons of ordinary skill in the art having benefit of the present disclosure should appreciate that the call may not be terminated at mobile unit 135 and alternatively may be terminated by any type of communication device.

A controller 145 in the mobile unit 110 may monitor channel conditions associated with the wireless communication link 115(1). If the controller 145 determines that the channel conditions of the wireless communication link 115(1) have degraded, the controller 145 may initiate a handover to a different wireless access technology. For example, the controller 145 may compare a parameter such as a pilot signal strength, a signal-to-noise ratio, a signal-to-noise-plus-interference ratio, a bit error rate, and the like to an appropriate threshold to determine when the channel conditions have degraded to the point that a handover to a different wireless access technology is desirable and/or necessary. The handoff may also be triggered based on preconfigured application-based policy preferences. For example, a handover from WiMAX to EVDO may be triggered as soon as the target technology signal strength is greater than certain threshold, irrespective of the source technology signal strength. Furthermore, the handoff may be triggered based on preconfigured user preferences. For example, if WiMAX access is cheaper the controller 145 may elect to switch to WiMAX as soon as its signal strength is adequate. In some cases, the service provider network policy may override the user policy.

When the controller 145 decides to initiate a handover, the controller 145 may cause the mobile unit 110 to establish a second wireless communication link 115(2) according to the second wireless access technology in preparation for an inter-technology handover. For example, the client 125 may then communicate over the second wireless communication link 115(2) via a radio access network 120(2), a foreign agent 137(2), and the home agent 140. For example, to provide seamless mobility, IP/MIP session continuity, and maintain QoS when mobile unit 110 switches between different wireless access technologies. The proposed mechanism may be particularly useful in cases when mobile unit vendors implement MIP clients that are tightly coupled with on-chip device drivers, as well as in cases when different technology standards choose not to use MIP Client (*e.g*., using PMIP client in the radio access network).

The handoff is performed with simultaneous bindings to the IP session used by the application 130. In this case MIP client 125 sends a first MIP registration message over the second technology link 115(2) with simultaneous bindings. Reception of the first MIP registration message causes the home agent 140 to add a binding and start bi-casting downlink traffic to the mobile unit 110 over both RANs 120(1-2). To avoid duplicating the information received at the application 130, the controller 145 may instruct the application 130 to ignore or drop any packets received via either the first or the second wireless communication link 115 while the simultaneous binding is being used. The controller 145 may then hand off the call from the first wireless communication link 115(1) to the second wireless communication link 115(2). For example, the client 125 may send a second MIP registration (without simultaneous bindings) to the home agent 140 over the second wireless communication link 115(2). The second MIP registration message triggers removal of the old binding and de-registration of the first wireless communication link 115(1) over the old access technology. Thus, the home agent 140 can revoke the first wireless communication link 115(1) without needing to receive a de-registration message via the first wireless communication link 115(1), which may be important because the quality of the first wireless communication link 115(1) has likely faded, which may reduce the probability that the de-registration message will be successfully received. Once the call has been handed off to the second wireless communication link 115(2), the controller 145 may instruct the application 130 to ignore or drop any packets received via the first wireless communication link 115(1).

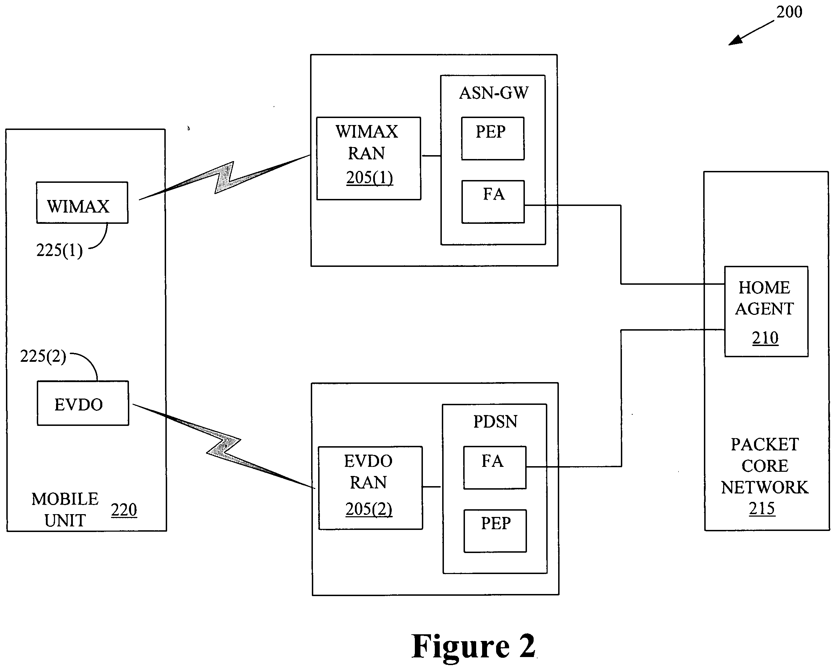

Figure 2 conceptually illustrates a second exemplary embodiment of a wireless communication system 200. In the illustrated embodiment, the wireless communication system 200 is implemented according to the reference architecture of the Client MIPv4-based model. Operation of the wireless communication system 200 will be described herein in the context of the reference architecture of the Client MIPv4-based model. However, persons of ordinary skill in the art having benefit of the present disclosure should appreciate that the second exemplary embodiment is intended to be illustrative and not to limit the present invention to this particular reference architecture and protocols. In alternative embodiments, other reference architectures including other functional entities may also be used to describe and/or implement the wireless communication system 200.

The wireless communication system 200 includes at least two separate access technology dependent radio access networks (RANs) 205. In the illustrated embodiment, the radio access networks 205 include a WIMAX RAN 205(1) that is coupled to an access serving network-gateway (ASN-GW) that includes a policy enforcement point (PEP) and a foreign agent (FA). The radio access networks 205 also include an EVDO RAN 205(1) that is coupled to a packet data serving node (PDSN) that includes a PEP and a foreign agent (FA). The foreign agents in the ASN-GW and PDSN can communicate with a home agent 210 located in a packet core network 215. In one embodiment, the home agent 210 can communicate with an IP multimedia subsystem (IMS) network (not shown in Figure 2).

Mobile unit (or user equipment) 220 is a dual transceiver mobile unit 220 that can support multiple modems that operate according to different wireless access technologies. In the illustrated embodiment, the mobile unit 220 can implement two modems 225 that may be used to establish IP connectivity with the corresponding RAN 205. The first modem 225(1) operates according to the WIMAX wireless access technology and the second modem 225(2) operates according to the EVDO wireless access technology. Persons of ordinary skill in the art should appreciate that the WIMAX and EVDO access technologies are used as examples and are not intended to limit the present invention. In alternative embodiments, the techniques described herein could also be used to support interworking of packet data (BE or QoS) from other wireless access technologies. For example, the mobile unit 220 can have 2 or more modems 225 that operate according to different access technologies such as WiMAX, EVDO, GSM , WiFi, and the like.

The two independent modems 225 on the mobile unit 220 can establish independent call sessions according to their respective wireless access technologies. For example, a VoIP call may be established between the modem 225(1) and another mobile unit (not shown in Figure 2) over a WiMAX connection. For another example, a VoIP call may be established between the modem 225(2) and another mobile unit (not shown in Figure 2) over an EVDO connection. Connection management in the mobile unit 220 is triggered by detecting changes in the radio conditions over the WIMAX connection. In preparation for a hand-off to the EVDO link, the connection management function in the mobile unit 220 may initiate establishment of an EVDO link using modem 225(2) when the radio conditions over the WIMAX connection have deteriorated.

The handoff is performed with simultaneous bindings to the previously established IP session associated with the WiMAX call. In one embodiment, a first MIP registration message is sent over the EVDO link with simultaneous bindings. Reception of the first MIP registration message causes the home agent 210 to add a binding and start bi-casting downlink traffic to the mobile unit 220 over both RANs 205(1-2). To avoid duplicating the information received, the mobile unit 220 may ignore or drop any packets received via either the WiMAX or EVDO link while the simultaneous binding is being used.

Following handoff of the call to the second modem 225(2), the mobile unit 220 transmits a request to de-register the wireless communication link supported by the first modem 225(1) and to de-allocate the wireless communication resources used to support this wireless communication link. Since the quality of the first wireless communication link established using the first modem 225(2) has likely faded, which may reduce the probability that the de-registration message will be successfully received at the WiMAX radio access network 205(1) if it is transmitted by the WiMAX modem 225(1), the mobile unit 220 may transmit the de-registration message using the EV-DO modem 225(2) to the EV-DO radio access network 205(2). The de-registration message may then be transmitted via the PDSN to the home agent 210, which deregisters binding with the Foreign agent of the WiMAX access technology. The home agent 210 then initiates registration revocation to the WiMAX radio access network 205(1). Upon reception of the registration revocation message, the WiMAX radio access network 205(1) may deregister the first wireless communication link and de-allocate the associated wireless communication resources. For example, the WiMAX radio access network 205(1) may release the corresponding IMS session and connection to the conference circuit. In one embodiment, the conference circuit can be released and a two way call can be established in place of the conference call. The corresponding MIP session over the WiMAX link can be released and the WiMAX link can be optionally terminated. The VoIP session then continues over EVDO link.

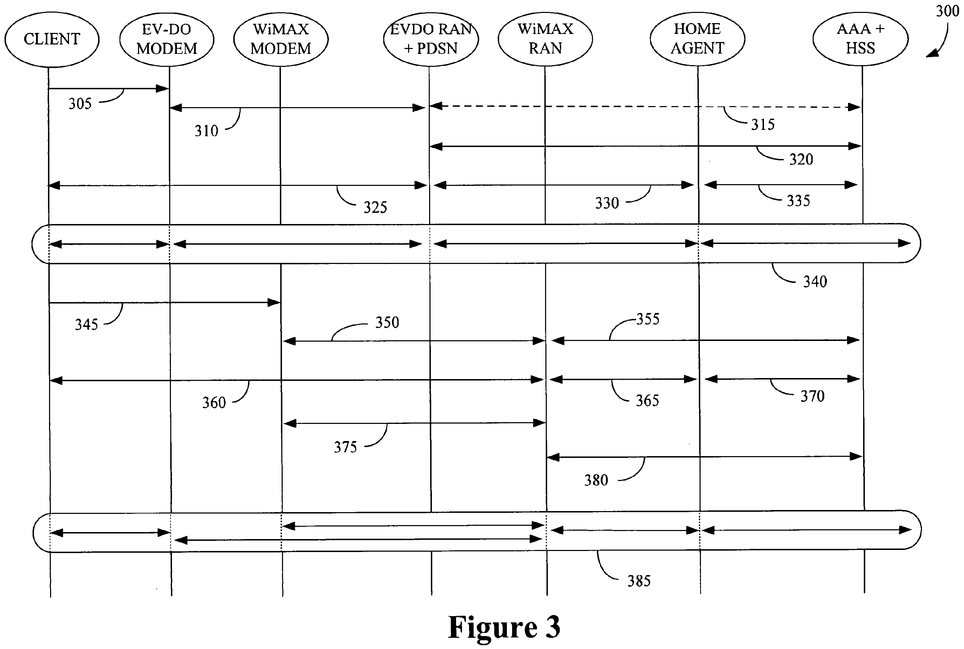

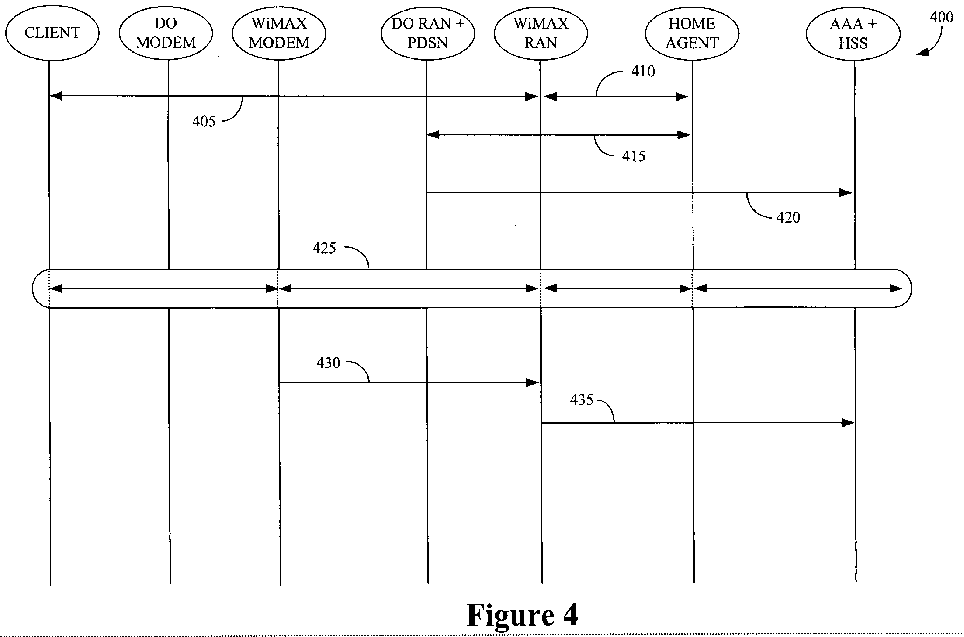

Figures 3 and 4 illustrate portions 300, 400, of one exemplary embodiment of a method of best-effort handoff that supports session continuity for multi-mode user equipment in a packet-based wireless communication system. In the illustrated embodiment, the packet-based wireless communication system provides wireless connectivity to at least one mobile unit or user equipment (UE). The user equipment includes a manager entity, sometimes referred to as an intelligent connection manager, which is configured to monitor channel conditions and manage hand offs between one or more clients that operate according to multiple wireless access technologies. In the illustrated embodiment, the user equipment supports two wireless access technologies (WIMAX and EVDO) and so the user equipment can support at least one client that communicates over the air interface using dual access technology radios associated with independent means of IP connectivity establishment for each wireless access technology. For example, the mobile unit may include a modem that operates in accordance with the EV-DO standards and/or protocols and a modem that operates in accordance with the WiMAX standards and/or protocols. In the illustrated embodiment, a common network access identifier (NAI) is used for access authentication.

The wireless communication system also includes access technology specific RANs that conform to the corresponding standards. In the illustrated embodiment, the wireless access technologies are WiMAX and EV-DO and so the RANs include access serving network gateways (ASN-GW) and packet data serving nodes (PDSNs), respectively. In one embodiment, the RANs support MIPv4 client-based user equipment. However, persons of ordinary skill in the art should appreciate that the present invention is not limited to these particular wireless access technologies. A single home agent is used for both wireless access technologies. Furthermore, in multi-mode user equipment that support more than two wireless access technologies, a single home agent is used to provide continuity for the IP connectivity to the user equipment.

In the illustrated embodiment, the wireless communication system includes an authentication, authorization, and accounting (AAA) server and a Home Subscriber Service (HSS). The AAA/HSS entities may be used to authenticate clients, authorize use of the wireless communication resources, and perform accounting functions such as keeping billing records. Techniques for implementing and/or operating the AAA/HSS are known in the art and in the interest of clarity, only those aspects of implementing and/or operating the AAA/HSS that are relevant to the present invention will be discussed further herein. Persons of ordinary skill in the art having benefit of the present disclosure should appreciate that the particular functional entities shown in Figures 3 and 4 are intended to be illustrative and not to limit the present invention. In alternative embodiments, the wireless communication system may include more or fewer functional entities that perform the same functions as described herein or which perform other functions.

Figure 3 conceptually illustrates one exemplary embodiment of a method 300 or establishing concurrent call sessions with modems that operate according to different wireless access technologies. In the illustrated embodiment, the wireless communication device powers up and chooses to enter EV-DO air interface. The client therefore sends a message or signal (at 305) to the EV-DO modem instructing the modem to initiate communication over the air interface to the EV-DO RAN. The EV-DO modem and the EV-DO RAN exchange air interface messages to establish an EV-DO UATI session using the Session Configuration Protocol, as indicated by the arrow 310. Terminal authentication may optionally be implemented in the wireless communication system. If terminal authentication is turned on, the EV-DO RAN communicates with the AAA to perform terminal authentication based on the mobile unit's international mobile subscriber identifier (IMSI), as indicated by the arrow 315. The mobile unit may then be authenticated by exchanging user access authentication messages, as indicated by arrow 320.

The client then establishes IP connectivity with the EV-DO RAN. In the illustrated embodiment, the client establishes a best effort connection by exchanging link control protocol (LCP) and Internet Protocol Control Protocol (IPCP) messages to establish a point-to-point protocol (PPP) session, as indicated by the arrow 325. The PPP negotiation triggers the PDSN to send an MIP FA advertisement through the EV-DO air interface and EV DO modem card, which card delivers the message to MS MIP client, as indicated by the arrow 330. In one embodiment, the home agent and the AAA exchange messages to validate the MN-HA key that may be used for secure communication, as indicated by the arrow 335. At this point, the client in the mobile unit may establish a call (at 340), such as a Voice over Internet Protocol (VoIP) call, over a quality-of-service (QoS) connection via the home agent. A single home agent binding to the EV-DO modem is used for the call connection.

The mobile unit may decide to handoff from the EV-DO wireless access technology to the WiMAX wireless access technology, e.g., in response to determining that the wireless communication link over the EV-DO air interface is fading relative to the wireless communication link available over the WiMAX air interface. In the illustrated embodiment, and intelligent connection manager in the mobile unit decides to handoff to the WiMAX technology based on a signal strength measurement and sends the hand off trigger to the WiMAX modem, as indicated by the arrow 345. The WiMAX modem and the WiMAX RAN may then negotiate and set up a call session. In the illustrated embodiment, the WiMAX RAN connection setup is performed by initial ranging, device authentication, user authentication, capability exchange, and establishment of primary and basic management connections, as indicated by the arrow 350. In one embodiment, the client may be authenticated. For example, during the WiMAX connection setup, an extensible authentication protocol (EAP) authentication is performed with the AAA server, as indicated by the arrow 355. The mobile unit's NAI may be used for the EAP authentication.

The client may then establish IP connectivity via the home agent, as indicated by the arrows 360, 365, 370. In the illustrated embodiment, the WiMAX RAN establishes a mobile IP connection (MIP) that permits concurrent binding with the previously established EV-DO communication session, as indicated by the arrow 360. The WiMAX RAN also sets up (at 365) an MIP session with the home agent and, when authentication is being used, negotiates (at 370) a MN-HA key with the AAA server for use in subsequent secure communication. A service flow is set up (at 375) for the WiMAX RAN connection in best effort mode for VoIP and the WiMAX RAN sends (at 380) a message or signal indicating that the accounting associated with the service flow should be set up by the AAA server. At this point, a best effort connection is established (at 385) that may be used to carry payloads, such as VoIP payloads, via the home agent using the concurrent bindings to the EV-DO and WiMAX access technologies. In the illustrated embodiment, the home agent sends data packets to the WiMAX WAC as well as the PDSN in the EV-DO RAN.

Figure 4 conceptually illustrates one exemplary embodiment of a method 400 for de-registering a call session. The mobile unit decides to hand off to the WiMAX connection and sends a message or signal to the home agent via the WiMAX RAN requesting de-registration of the EV-DO connection, as indicated by the arrows 405, 410. In the illustrated embodiment, after a period during which the client receives data concurrently from both the EV-DO modem and the WiMAX modem, the intelligent mobility connection manager decides to switch to WiMAX and abandon the EV-DO air interface. The client sends (at 405) a MIP re-registration request (Re-RRQ) to the home agent that includes information that indicates that the client wants to turn the simultaneous binding off. The home agent acknowledges (at 410) the MIP Re-RRQ with a MIP registration response (RRP) message. Upon receiving the MIP Re-RRQ from the client, the home agent and the EV-DO PDSN exchange MIP messages (at 415) to revoke the previous MIP session (*i.e.,* the DO MIP session). For example, the RFC 3344 has stated that a home agent may revoke the previous MIP session upon receipt of MIP Re-registration to turn off simultaneous binding.

As a result of revoking the EV-DO session, the EV-DO PDSN may clear the EV-DO MIP session, PPP session, and any other existing radiofrequency connections, e.g., as specified in the 3GPP2 standard (IS-835D). The PDSN sends (at 420) a request to stop the accounting process associated with the EV-DO session to the AAA server. The AAA server may then stop accounting on both the default best effort flow and QoS bearer flow associated with the EV-DO session. In one embodiment, the EVDO link may be explicitly shut down at the end of the handover. However, considering the handover situation where the signal strength on the EVDO air interface may be weak and unreliable, it may be preferable to avoid sending an over-the-air message to the mobile unit to clean up (*e.g*., release and/or de-allocate) the EV-DO resources. In this case, the PPP session at the client side can either time out or be torn down by the client immediately. The client now has a single binding on the WiMAX system and utilizes a best effort connection (at 425) to carry payloads, such as VoIP payloads, via the WiMAX modem, the WiMAX RAN, and the home agent.

When the call is complete, the client may transition to idle mode. In the illustrated embodiment, the client initiates the transition to idle mode by disconnecting (at 430) the WiMAX connection when it decides to transition to idle mode. In response to the request to disconnect received from the WiMAX modem, the WiMAX RAN may send an accounting stop message to AAA server, *e.g.,* a message or signal indicating that the accounting associated with the WiMAX service flow should be discontinued or stopped by the AAA server.

The particular embodiments disclosed above are illustrative only, as the invention may be modified and practiced in different manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A method implemented in a mobile unit (110; 220) capable of communicating with a network according to multiple wireless access technologies, comprising:
performing a handoff of the mobile unit (110; 220) from a first wireless communication link (115(1)) established according to a first wireless access technology to a second wireless communication link (115(2)) established according to a second wireless access technology that is different than the first wireless access technology; and
transmitting, over the second wireless communication link (115(2)), a de-registration message requesting de-registration of the first wireless communication link (115(1)) in response to performing the handoff,
**characterized in that** the method further comprises terminating at the mobile unit (110; 220) a point-to-point protocol, PPP, session of the first wireless communication link either after a time out after handoff or immediately after handoff, when the network avoids sending an over-the-air message to the mobile unit to release and/or de-allocate resources of the first wireless communication link, due to a handover situation where the signal strength on the first wireless communication link is weak and unreliable.

2. The method of claim 1, wherein performing the handoff of the mobile unit (110; 220) comprises performing the handoff of the mobile unit (110; 220) based upon at least one measurement of at least one channel condition associated with at least one of the first wireless communication link (115(1)) for the second wireless communication link (115(2)), and wherein performing the handoff of the mobile unit (110; 220) comprises performing the handoff in response to determining that the first wireless communication link (115(1)) is fading relative to the second wireless communication link (115(2)) based upon said at least one measurement.

3. The method of claim 1, wherein transmitting the de-registration message over the second wireless communication link (115(2)) comprises transmitting a Mobile Internet Protocol (MIP) de-registration message to a home agent associated with the second wireless communication link (115(2)) such that the home agent can request de-registration of the first wireless communication link (115(1)) and release of the associated wireless communication resources.

4. The method of claim 1, comprising:
establishing a call from a first modem in the mobile unit (110; 220) using the first wireless communication link (115(1)), and wherein performing the handoff comprises establishing communication with a second modem in the mobile unit (110; 220) using the second wireless communication link (115(2)); and
establishing a simultaneous binding of the first wireless communication link (115(1)) and the second wireless communication link, wherein performing the handoff comprises bi-casting information using the simultaneous binding.

## Patentansprüche

1. Verfahren, das in einer mobilen Einheit (110; 220) implementiert wird, die in der Lage ist, gemäß mehreren Drahtloszugangstechnologien mit einem Netz zu kommunizieren, umfassend:
Durchführen einer Verbindungsübergabe für die mobile Einheit (110; 220) von einer ersten Drahtloskommunikationsverbindung (115(1)), die gemäß einer ersten Drahtloszugangstechnologie eingerichtet worden ist, auf eine zweite Drahtloskommunikationsverbindung (115(2)), die gemäß einer zweiten Drahtloszugangstechnologie eingerichtet wird, die von der ersten Drahtloszugangstechnologie verschieden ist; und
Senden einer Abmeldungsmitteilung, die eine Abmeldung der ersten Drahtloskommunikationsverbindung (115(1)) verlangt, über die zweite Drahtloskommunikationsverbindung (115(2)), als Reaktion auf die Verbindungsübergabe,
**dadurch gekennzeichnet, dass** das Verfahren ferner umfasst:
Beenden einer Punkt-zu-Punkt-Protokoll(ppp)-Sitzung auf der ersten Drahtloskommunikationsverbindung (115(1)) an der mobilen Einheit (110; 220), entweder nach einer Auszeit nach der Verbindungsübergabe oder sofort nach der Verbindungsübergabe, wenn das Netz ein Senden einer Mitteilung an die mobile Einheit über Funk vermeidet, um aufgrund einer Verbindungsübergabesituation, wo die Signalstärke auf der ersten Drahtloskommunikationsverbindung schwach und unzuverlässig ist, Ressourcen der ersten Drahtloskommunikationsverbindung freizugeben und/oder neu zuzuweisen.

2. Verfahren nach Anspruch 1, wobei das Durchführen der Verbindungsübergabe für die mobile Einheit (110; 220) das Durchführen der Verbindungsübergabe für die mobile Einheit (110; 220) auf Basis von mindestens einer Messung von mindestens einer Kanalbedingung, die mit der ersten Drahtloskommunikationsverbindung (115(1)) und/oder der zweiten Drahtloskommunikationsverbindung (115(2)) assoziiert ist, umfasst, und wobei das Durchführen der Verbindungsübergabe für die mobile Einheit (110; 220) das Durchführen der Verbindungsübergabe als Reaktion auf eine Feststellung, dass die erste Drahtloskommunikationsverbindung (115(1)) im Vergleich zur zweiten Drahtloskommunikationsverbindung (115(2)) schwächer wird, auf Basis der mindestens einen Messung umfasst.

3. Verfahren nach Anspruch 1, wobei das Senden der Abmeldungsmitteilung über die zweite Drahtloskommunikationsverbindung (115(2)) das Senden einer Mobile-lnternet-Protocol(MIP)-Abmeldungsmitteilung an einen Home Agent, der mit der zweiten Drahtloskommunikationsverbindung (115(2)) assoziiert ist, umfasst, so dass der Home Agent eine Abmeldung der ersten Drahtloskommunikationsverbindung (115(1)) verlangen und die damit assoziierten Drahtloskommunikationsressourcen freigeben kann.

4. Verfahren nach Anspruch 1, umfassend:
Aufbauen eines Anrufs von einem ersten Modem in der mobilen Einheit (110; 220) aus unter Verwendung der ersten Drahtloskommunikationsverbindung (115(1)), und wobei das Durchführen der Verbindungsübergabe das Einrichten einer Kommunikation mit einem zweiten Modem in der mobilen Einheit (110; 220) unter Verwendung der zweiten Drahtloskommunikationsverbindung (115(2)) umfasst; und
Einrichten einer gleichzeitigen Bindung der ersten Drahtloskommunikationsverbindung (115(1)) und der zweiten Drahtloskommunikationsverbindung, wobei das Durchführen der Verbindungsübergabe ein zweifaches Ausgeben von Informationen unter Verwendung der gleichzeitigen Bindung umfasst.

## Revendications

1. Procédé mis en oeuvre dans une unité mobile (110 ; 220) capable de communiquer avec un réseau selon de multiples technologies d'accès sans fil, comprenant :
l'exécution d'un transfert de l'unité mobile (110 ; 220) à partir d'un premier lien de communication sans fil (115(1)), établi selon une première technologie d'accès sans fil, vers un deuxième lien de communication sans fil (115(2)), établi selon une deuxième technologie d'accès sans fil, qui est différente de la première technologie d'accès sans fil ; et
la transmission, sur le deuxième lien de communication sans fil (115(2)), d'un message d'enregistrement demandant un dés-enregistrement du premier lien de communication sans fil (115(1)) en réponse à la réalisation du transfert,
**caractérisé en ce que** le procédé comprend en outre
la terminaison, au niveau de l'unité mobile (110 ; 220), d'une session de protocole point à point, PPP, du premier lien de communication sans fil soit après un temps mort après le transfert, soit immédiatement après le transfert lorsque le réseau évite l'envoi d'un message hertzien vers l'unité mobile pour libérer et/ou dés-attribuer des ressources du premier lien de communication sans fil à cause d'une situation de transfert où l'intensité de signal sur le premier lien de communication sans fil est faible et non fiable.

2. Procédé selon la revendication 1, dans lequel la réalisation du transfert de l'unité mobile (110 ; 220) comprend la réalisation du transfert de l'unité mobile (110 ; 220) sur la base d'au moins une mesure d'au moins un état de canal associé avec au moins un parmi le premier lien de communication sans fil (115(1)) ou le deuxième lien de communication sans fil (115(2)), et dans lequel l'exécution du transfert de l'unité mobile (110 ; 220) comprend l'exécution du transfert en réponse à la détermination que le premier lien de communication sans fil (115(1)) s'efface par rapport au deuxième lien de communication sans fil (115(2)) sur la base de ladite au moins une mesure.

3. Procédé selon la revendication 1, dans lequel la transmission du message de dés-enregistrement sur le deuxième lien de communication sans fil (115(2)) comprend la transmission d'un message de dés-enregistrement de protocole internet mobile (MIP) à un agent de rattachement associé avec le deuxième lien de communication sans fil (115(2)) de sorte que l'agent de rattachement puisse demander le dés-enregistrement du premier lien de communication sans fil (115(1)) et la libération des ressources de communication sans fil associées.

4. Procédé selon la revendication 1, comprenant :
l'établissement d'un appel à partir d'un premier modem dans l'unité mobile (110 ; 220) en utilisant le premier lien de communication sans fil (115(1)) et dans lequel la réalisation du transfert comprend l'établissement d'une communication avec un deuxième modem dans l'unité mobile (110 ; 220) en utilisant le deuxième lien de communication sans fil (115(2)) ; et
l'établissement d'une liaison simultanée du premier lien de communication sans fil (115(1)) et du deuxième lien de communication sans fil, dans lequel l'exécution du transfert comprend une information de diffusion double en utilisant la liaison simultanée.
